# EUROPEAN PATENT APPLICATION

(11) **EP 3 961 433 A2**
(43) Date of publication of application: **02.03.2022**
(21) Application number: 21200298.4
(22) Date of filing: 30.09.2021
(51) Int. Cl.: G06F 16/906

(54) **DATA ANNOTATION METHOD AND APPARATUS, ELECTRONIC DEVICE AND STORAGE MEDIUM**

(30) Priority: 09.12.2020 CN 202011449187
(71) Applicant: Beijing Baidu Netcom Science and Technology Co., Ltd., Beijing 100085 (CN)
(72) Inventor: YANG, Xue, BEIJING, 100085 (CN)
(74) Representative: Regimbeau

(57) **Abstract**

Provided are a data annotation method and apparatus, an electronic device and a storage medium which relate to the technical field of artificial intelligence and further relate to a data annotation technology. The method includes: determining a data annotation factor, where the data annotation factor includes a data annotation element and an annotation operation matrix; acquiring to-be-annotated data according to the data annotation element; and annotating the to-be-annotated data according to the annotation operation matrix. The maintenance and use cost of data annotation can be reduced, and the universality and efficiency of data annotation can be improved.

## Description

### TECHNICAL FIELD

The present application relates to the technical field of data processing and in particular to a data annotation technology among artificial intelligence technologies.

### BACKGROUND

As artificial intelligence technologies develop and are applied to more and more service scenarios, a model in a specific scenario is often required to be trained. Accordingly, a large amount of sample data in such scenario needs to be annotated in order to obtain the model with high precision and strong generalization ability through the training. Therefore, there is a growing demand for data annotation. Under normal circumstances, corresponding annotation tools are often needed to annotate corresponding types of data in order to meet the annotation requirements of data in various vertical scenarios.

### SUMMARY

The present application provide a data annotation method and apparatus, an electronic device and a storage medium so as to reduce the maintenance and use cost of data annotation and improve the universality and efficiency of data annotation.

In a first aspect, the present application provides a data annotation method. The method includes the steps described below.

A data annotation factor is determined, where the data annotation factor includes a data annotation element and an annotation operation matrix.

To-be-annotated data is acquired according to the data annotation element.

The to-be-annotated data is annotated according to the annotation operation matrix.

In a second aspect, the present application provides a data annotation apparatus. The apparatus includes a data annotation factor determination module, a to-be-annotated data acquisition module and a to-be-annotated data annotation module.

The data annotation factor determination module is configured to determine a data annotation factor, where the data annotation factor includes a data annotation element and an annotation operation matrix.

The to-be-annotated data acquisition module is configured to acquire to-be-annotated data according to the data annotation element.

The to-be-annotated data annotation module is configured to annotate the to-be-annotated data according to the annotation operation matrix.

In a third aspect, the present application provides an electronic device including at least one processor and a memory.

The memory is communicatively connected to the at least one processor.

The memory stores an instruction executable by the at least one processor, and the instruction is executed by the at least one processor to cause the at least one processor to perform the data annotation method described in the embodiment in the first aspect.

In a fourth aspect, the present application provides a non-transitory computer-readable storage medium storing a computer instruction for causing a computer to perform the data annotation method described in the embodiment in the first aspect.

In a fifth aspect, the present application provides a computer program product. The computer program product includes a computer program which, when executed by a processor, implements the data annotation method described in the embodiment in the first aspect.

According to the embodiments of the present application, after the data annotation factor including the data annotation element and the annotation operation matrix is determined, the to-be-annotated data is acquired according to the data annotation element, and the to-be-annotated data is annotated according to the annotation operation matrix, solving the problems of high maintenance and use cost, poor universality and low efficiency of the existing data annotation method, and thus reducing the maintenance and use cost of data annotation and improving the universality and efficiency of data annotation.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the present solution and not to limit the present application.In the drawings:
FIG. 1 is a flowchart of a data annotation method according to an embodiment of the present application;
FIG. 2 is a flowchart of a data annotation method according to an embodiment of the present application;
FIG. 3 is a schematic effect diagram of a configuration interface of a data annotation factor according to an embodiment of the present application;
FIG. 4 is a schematic effect diagram of a data annotation interface suitable for a text extraction application scenario according to an embodiment of the present application;
FIG. 5 is a schematic effect diagram of a configuration interface of an annotation operation matrix according to an embodiment of the present application;
FIG. 6 is a schematic effect diagram of an annotation interface of audio data in a data identification scenario according to an embodiment of the present application;
FIG. 7 is a structure diagram of a data annotation apparatus according to an embodiment of the present application; and
FIG. 8 is a structure diagram of an electronic device for implementing a data annotation method according to an embodiment of the present application.

### DETAILED DESCRIPTION

Example embodiments of the present application, including details of embodiments of the present application, are described hereinafter in conjunction with the drawings to facilitate understanding. The example embodiments are illustrative only. Therefore, it is to be understood by those of ordinary skill in the art that various changes and modifications may be made to the embodiments described herein without departing from the scope and spirit of the present application. Similarly, description of well-known functions and constructions is omitted hereinafter for clarity and conciseness.

Various existing types of data annotation tools are usually customized annotation tools which can only meet the annotation requirements of a single scenario. For example, the annotation requirements of speech, video and text data are met mainly through various vertical annotation tools. Common vertical annotation tools include: a speech transcription tool, an image annotation tool, a video annotation tool and a text extraction tool. The speech transcription tool is mainly suitable for segmentation and transcription of long and short speech. The transcription refers to identifying non-text data as text data. The image annotation tool is mainly suitable for annotating some specific objects in an image such as annotating obstacles in an image. The video annotation tool is mainly suitable for extraction of important video clips, transcription of video content and the like. The text extraction tool is mainly suitable for keyword extraction of neuro-linguistic programming (NLP).

There is a wide variety of existing types of annotation tools, which are expensive to maintain and use. A single annotation tool cannot well provide support in a slightly complicated hybrid annotation scenario, resulting in the need of splitting to-be-annotated data, serially annotating the split data by different annotation tools and merging the obtained results. It can be seen that the data annotation method involved in the existing annotation tool has poor universality, which undoubtedly prolongs the annotation process and leads to a decrease in annotation efficiency.

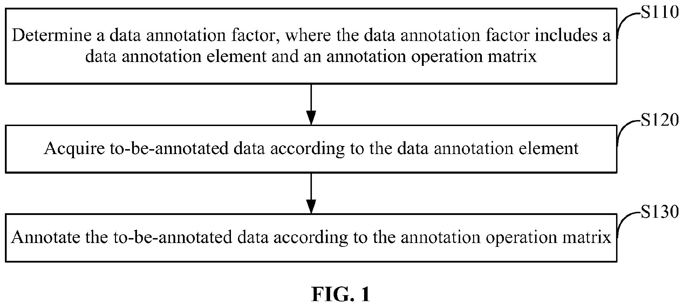

In one example, FIG. 1 is a flowchart of a data annotation method according to an embodiment of the present application. This embodiment is suitable for the case where a unified data annotation method is adopted for annotating various types of data. The method may be performed by a data annotation apparatus which may be implemented by software and/or hardware and may generally be integrated in an electronic device.The electronic device may be a computer device or the like. Accordingly, as shown in FIG. 1, the method includes the operations described below.

In S110, a data annotation factor is determined, where the data annotation factor includes a data annotation element and an annotation operation matrix.

The data annotation factor may be an association factor for annotating to-be-annotated data. The data annotation factor may include, but is not limited to, the data annotation element and the annotation operation matrix. The data annotation element may be used for defining a type of data that can be annotated, and then the to-be-annotated data is determined according to the data type. The annotation operation matrix may be used for annotation of the to-be-annotated data.

In the embodiment of the present application, the data annotation factor such as the data annotation element and the annotation operation matrix need to be determined before the annotation of data.

In S120, to-be-annotated data is acquired according to the data annotation element.

The to-be-annotated data may be data that needs to be annotated. The data type of the to-be-annotated data may include, but is not limited to, audio data, video data, picture data, text data and webpage data, that is, may be any data type with annotation requirements. The embodiment of the present application does not limit the specific data type of the to-be-annotated data.

Accordingly, after the data annotation element is determined, the to-be-annotated data can be acquired according to the data annotation element. Exemplarily, a matching element type can be determined from the element types of the data annotation element according to the data type of the to-be-annotated data, and then the corresponding to-be-annotated data can be acquired according to the matching element type.

In S130, the to-be-annotated data is annotated according to the annotation operation matrix.

In the embodiment of the present application, after the to-be-annotated data is acquired, the to-be-annotated data can be annotated according to the annotation operation matrix. It is to be noted that the annotation operation matrix may define the specific annotation attribute of the to-be-annotated data. Exemplarily, each piece of annotation data in the to-be-annotated data is determined according to a row element of the annotation operation matrix, and the specific annotation attribute of each piece of annotation data is determined according to a column element of the annotation operation matrix. For example, the data starting and ending positions, the annotation number or the like corresponding to each piece of annotation data can be determined through the column element.

It can be seen that through the annotation operation matrix, all data types with annotation requirements can be configured with corresponding annotation attributes to meet the annotation requirements. It is to be noted that the data annotation method provided by the embodiment of the present application may be applied to one set of annotation tools. That is, with the data annotation method provided by the embodiment of the present application, the data annotation task for all data types can be achieved with one set of annotation tools. The universality is stronger, and the maintenance and use cost of data annotation is reduced. Moreover, without the need of splitting to-be-annotated data, serially annotating the split data by different annotation tools and merging the obtained results, the efficiency of data annotation can also be greatly improved.

According to the embodiment of the present application, after the data annotation factor including the data annotation element and the annotation operation matrix is determined, the to-be-annotated data is acquired according to the data annotation element, and the to-be-annotated data is annotated according to the annotation operation matrix, solving the problems of high maintenance and use cost, poor universality and low efficiency of the existing data annotation method, and thus reducing the maintenance and use cost of data annotation and improving the universality and efficiency of data annotation.

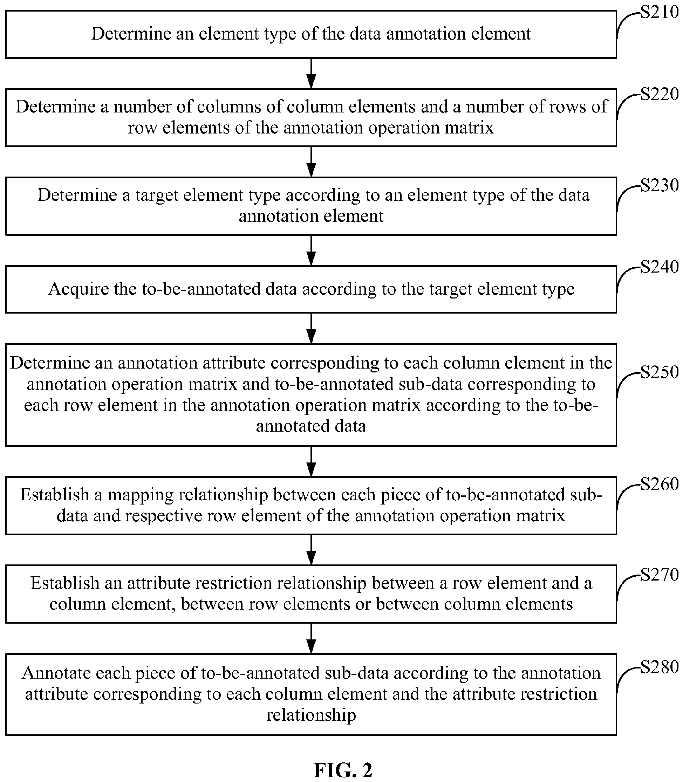

In one example, FIG. 2 is a flowchart of a data annotation method according to an embodiment of the present application. This embodiment is an optimization and improvement on the basis of the technical solution of the preceding embodiment and provides several exemplary implementations in which the data annotation factor is determined, the to-be-annotated data is acquired according to the data annotation element, and the to-be-annotated data is annotated according to the annotation operation matrix.

A data annotation method as shown in FIG. 2 includes the steps described below.

In S210, an element type of the data annotation element is determined.

The element type may include, but is not limited to, an audio data element, a video data element, a picture data element, a text data element and a webpage data element.

The audio data element may represent an audio data type, the video data element may represent a video data type, the picture data element may represent a picture data type, the text data element may represent a text data type, and the webpage data element may represent a webpage data type. In addition to the above types, the element type of the data annotation element may also be other data types with annotation requirements and is not limited in the embodiments of the present application.

In the embodiment of the present application, when the data annotation element is determined, the element type corresponding to the data annotation element may be specifically determined. Considering the universality of the data annotation tool, each data type with annotation requirements may be considered as the element type. Moreover, the element type may be updated according to actual requirements, that is, when a new data type has annotation requirements, the data annotation element may be updated according to the element type corresponding to the new data type. It can be seen that the universality of the data annotation method can be improved through determination of the data annotation element.

In S220, a number of columns of column elements and a number of rows of row elements of the annotation operation matrix are determined.

The row element of the annotation operation matrix is configured to determine the to-be-annotated data, and the column element of the annotation operation matrix is configured to determine an annotation attribute matching the to-be-annotated data. The annotation attribute is the specific annotation content of the to-be-annotated data, such as noise determination, a data title or data starting and ending positions. Any annotation requirement may form a corresponding annotation attribute, and the specific content of the annotation attribute is not limited in the embodiments of the present application.

It is to be understood that the annotation operation matrix may include a row element and a column element. Therefore, when the annotation operation matrix is determined, the number of rows of row elements and the number of columns of column elements of the annotation operation matrix can be determined. The number of pieces of data in the to-be-annotated data can be defined through setting of the number of rows, and the number of annotation attributes of the to-be-annotated data can be defined through setting of the number of columns.

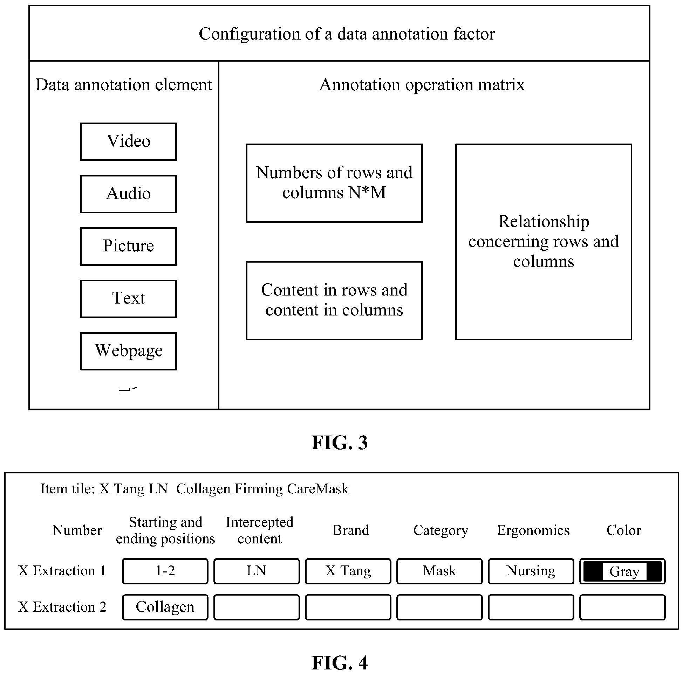

FIG. 3 is a schematic effect diagram of a configuration interface of a data annotation factor according to an embodiment of the present application. In one exemplary example, as shown in FIG. 3, the data annotation element and the annotation operation matrix may be configured through the configuration interface of the data annotation factor to determine the data annotation factor. For example, the element type of the data annotation element may be determined to be the audio data element, the video data element, the picture data element, the text data element, or the webpage data element, and the number of rows, the number of columns, and the content of rows and columns of the annotation operation matrix may be set. In addition, the relationship between a row and a column of the annotation operation matrix may also be set to constrain a restriction relationship between the row and the column at the stage of determining the annotation operation matrix.

In S230, a target element type is determined according to an element type of the data annotation element.

The target element type may be the element type corresponding to the to-be-annotated data.

After the data annotation factor is determined to include the data annotation element and the annotation operation matrix, the target element type can be determined according to the element type of the data annotation element. Exemplarily, assuming that the to-be-annotated data is text data, the target element type is the text data element. Accordingly, as shown in FIG. 2, "text" may be selected as the target element type.

In S240, the to-be-annotated data is acquired according to the target element type.

Accordingly, after the target element type is determined, the to-be-annotated data can be acquired according to the target element type. Exemplarily, the to-be-annotated data can be acquired in a manner of importing a data file or in a manner of directly inputting data as long as the to-be-annotated data can be acquired. The manner of acquiring the to-be-annotated data is not limited in the embodiments of the present application.

In the preceding technical solution, the target element type is determined from all element types so that the to-be-annotated data is determined according to the target element type. In this manner, the annotation requirement of any type of data can be met.

In S250, an annotation attribute corresponding to each column element in the annotation operation matrix and to-be-annotated sub-data corresponding to each row element in the annotation operation matrix are determined according to the to-be-annotated data.

The to-be-annotated sub-data may be part of the to-be-annotated data. Exemplarily, assuming that the to-be-annotated data is five pictures, each picture may be used as one piece of to-be-annotated sub-data. Assuming that the to-be-annotated data is a text paragraph consisting of ten sentences of short text, each sentence of short text may be used as one piece of to-be-annotated sub-data. The specific data content of the to-be-annotated sub-data is not limited in the embodiments of the present application.

In S260, a mapping relationship is established between each piece of to-be-annotated sub-data and a respective row element of the annotation operation matrix.

In the embodiment of the present application, when the to-be-annotated data is annotated according to the annotation operation matrix, the to-be-annotated sub-data corresponding to each row element and the annotation attribute corresponding to each column element in the annotation operation matrix may be first determined according to the to-be-annotated data. Meanwhile, after the to-be-annotated sub-data corresponding to each row element is determined, the mapping relationship between each piece of to-be-annotated sub-data and the respective row element can be established. It is to be understood that the mapping relationship may be a default correspondence.

Exemplarily, the to-be-annotated data is a text paragraph consisting of five sentences of short text, and thus five row elements can be determined; each row element corresponds to one sentence of short text as one piece of to-be-annotated sub-data; accordingly, a mapping relationship exists between each piece of to-be-annotated sub-data and the respective row element. Meanwhile, a plurality of column elements may also be determined, and an annotation attribute corresponding to each column element can be determined. For example, the annotation attribute of a first column element is a number, that is, for sorting and numbering the short text, and the annotation attribute of a second column element is data interception content, i.e., important text data content intercepted from short text or the like.

In S270, an attribute restriction relationship between a row element and a column element, between row elements or between column elements is established.

The attribute restriction relationship may include a default correspondence, an inclusion relationship, an included relationship, a mutual exclusion relationship and a linkage relationship. The default correspondence is the correspondence between the row element and the column element in the matrix. The correspondence is embodied in a specific matrix element. For example, for the matrix element in the first row and the second column, the correspondence is the default correspondence between the row element in the first row and the column element in the second column. The inclusion relationship may be that one element includes another element. For example, an inclusion relationship existing between the column element in the second column and the column element in the first column is that the column element in the first column includes the column element in the second column, and the inclusion relationship refers to that the data of the column element in the first column needs to include the data of the column element in the second column. Exemplarily, the annotation attribute corresponding to the column element in the first column is an obstacle, the annotation attribute corresponding to the column element in the second column is a street lamp, and the inclusion relationship refers to that the obstacle includes the street lamp. Accordingly, the included relationship may be that one element is included in another element. For example, an included relationship existing between the column element in the second column and the column element in the first column is that the column element in the first column is included in the column element in the second column, and the included relationship refers to that the data of the column element in the second column needs to include the data of the column element in the first column. The mutual exclusion relationship may be that one element is mutually exclusive to another element. For example, a mutual exclusion relationship existing between the column element in the second column and the column element in the first column refers to that the data of the column element in the first column and the data of the column element in the second column are mutually exclusive.

Exemplarily, the annotation attribute corresponding to the column element in the first column is black and the annotation attribute corresponding to the column element in the second column is white. Apparently, black and white are mutually exclusive different colors. The linkage relationship may be an associated relationship between elements. For example, a linkage relationship existing among the column element in the second column, the column element in the first column and the column element in the third column refers to that the data of the column element in the first column and the data of the column element in the second column are associated, and the data of the column element in the first column and the data of the column element in the third column are associated. Exemplarily, the annotation attribute corresponding to the column element in the first column is efficacy, the annotation attribute corresponding to the column element in the second column is color, and the annotation attribute corresponding to the column element in the third column is category; and the linkage relationship refers to that color and efficacy are associated with each other and that color and category are associated with each other.

In the embodiment of the present application, after the annotation operation matrix is determined, the attribute restriction relationship between the row element and the column element, between row elements or between column elements in the annotation operation matrix can be further established so that the relationship between elements is configured through the attribute restriction relationship to further meet diversified data annotation requirements. It is to be noted that an attribute restriction relationship may or may not exist between elements, which may be set according to actual requirements and is not limited in the embodiments of the present application. It is to be understood that under normal circumstances, the attribute restriction relationship should not be set too complicated to avoid the increase in difficulty of data annotation or the reduction in quality of data annotation.

In S280, each piece of to-be-annotated sub-data is annotated according to the annotation attribute corresponding to each column element and the attribute restriction relationship.

Accordingly, after the to-be-annotated sub-data corresponding to each row element, the annotation attribute corresponding to each column element and the attribute restriction relationship between elements are determined, to-be-annotated sub-data corresponding to each row element can be annotated according to the annotation attribute corresponding to each column element and the attribute restriction relationship.

It can be seen that according to the preceding technical solution, the to-be-annotated sub-data corresponding to each row element, the annotation attribute corresponding to each column element and the attribute restriction relationship between elements are determined so that to-be-annotated sub-data corresponding to each row element is annotated according to the annotation attribute corresponding to each column element and the attribute restriction relationship and diversified data annotation requirements can be further met.

In one example embodiment of the present application, the data annotation method is applied to a data cleaning scenario; a number of rows in the annotation operation matrix is a first number, and a number of columns in the annotation operation matrix is a second number; the step of determining the annotation attribute corresponding to each column element in the annotation operation matrix may include determining an annotation attribute of a first column element to be data filtration and determining an annotation attribute of a second column element to be a filtration type; and the step of establishing the attribute restriction relationship between the row element and the column element, between the row elements or between the column elements may include establishing a default correspondence between the row element and the column element.

The first number may be 1, the second number may be n, n indicates that the number may be randomly set, and in general, n needs to be greater than or equal to 1. The first column element may be the column element in the first column and the second column element may be the column element in the second column.

In one example embodiment, the data annotation method provided by the embodiment of the present application may be applied to the data cleaning scenario. Data cleaning refers to performing cleaning processing on data. It is to be understood that any type of data may require data cleaning, such as noise cleaning, high-definition video cleaning, text content compliance cleaning and other data cleaning operations. The noise cleaning refers to deleting noisy data, the high-definition video cleaning refers to deleting non-high-definition video data, and the text content compliance cleaning may, for example, refer to deleting sensitive words, abnormal words or the like. Neither the specific cleaning manner nor the cleaning content of data cleaning is limited in the embodiments of the present application.

For the data cleaning scenario, the number of rows in the annotation operation matrix may be set to 1 and the number of columns in the annotation operation matrix may be set to n. A column title may further be set as a determination basis, a row element corresponds to one piece of to-be-annotated sub-data, and data cleaning can be performed on the to-be-annotated sub-data to complete the data annotation operation. The annotation attribute corresponding to each column element may be to-be-cleaned option content defined according to a cleaning requirement. Exemplarily, the annotation attribute of the first column element may be determined to be data filtration such as noise filtration, and the manner in which the annotation attribute of the data filtration is selected may further be set. If the annotation attribute of noise filtration is set to be a single choice, the options may include Noiseless and Noisy. Selecting Noiseless refers to cleaning data with no noise, and selecting Noisy refers to cleaning data with noise. In addition, the annotation attribute of the second column element may be further determined to be a filtration type such as noise type. The noise type may include, but is not limited to, male voice type, female voice type and mixed voice type. Accordingly, if no special attribute restriction relationship is required, the default correspondence between the row element and the column element may merely be established. It can be seen that annotation attributes such as data filtration and the filtration type are determined so that data annotation requirements in a variety of data cleaning scenarios can be met.

In one example embodiment of the present application, the data annotation method is applied to a data interception scenario; a number of rows in the annotation operation matrix is a third number, and a number of columns in the annotation operation matrix is a second number; the step of determining the annotation attribute corresponding to each column element in the annotation operation matrix may include determining an annotation attribute of a first column element to be a data number, determining an annotation attribute of a second column element to be a data target segment, determining an annotation attribute of a third column element to be a data title, determining an annotation attribute of a fourth column element to be data segment duration and determining an annotation attribute of a fifth column element to be a data review opinion; and the step of establishing the attribute restriction relationship between the row element and the column element, between the row elements or between the column elements may include establishing a default correspondence between the row element and the column element.

The third number may be 0, indicating that the number of rows may be increased indefinitely. The data number may denote the annotation number of the to-be-annotated sub-data, and the data target segment may be a segment of the to-be-annotated sub-data, such as a highlight segment. The data title may be a data title corresponding to to-be-annotated sub-data, such as a video title or an audio title. The data segment duration may be segment duration corresponding to to-be-annotated sub-data, such as video segment duration or audio segment duration. The data review opinion is a review opinion corresponding to to-be-annotated sub-data. The third column element may be the column element in the third column, the fourth column element may be the column element in the fourth column, and the fifth column element may be the column element in the fifth column.

In one example embodiment, the data annotation method provided by the embodiment of the present application may be applied to a data interception scenario. Data interception refers to performing interception processing on data. It is to be understood that any type of data may require data interception, for example, require data interception operations such as audio interception, text interception, video interception or selected picture interception. Neither the specific interception manner nor the interception content of data interception is limited in the embodiments of the present application.

For the data interception scenario, the number of rows in the annotation operation matrix may be set to 0 and the number of columns in the annotation operation matrix may be set to n. Each row element may correspond to one piece of to-be annotated sub-data, and data interception may be performed on each piece of to-be annotated sub-data to complete the data annotation operation. The annotation attribute corresponding to each column element may be to-be-intercepted option content defined according to an interception requirement. Exemplarily, the annotation attribute of the first column element may be determined to be a data number, for example, various pieces of to-be-annotated sub-data may be ordered incrementally from 1. It may also be determined that the annotation attribute of the second column element is the data target segment, that is, the required data segment, such as a highlight segment in a video, may be intercepted from each piece of to-be-annotated sub-data. It may also be determined that the annotation attribute of the third column element is the data title, that is, naming annotation is used as the data annotation of each piece of to-be-annotated sub-data. It may also be determined that the annotation attribute of the fourth column element is the data segment duration, that is, the segment duration corresponding to each data target segment is annotated. It may also be determined that the annotation attribute of the fifth column element is the data review opinion, that is, the review opinion put forward by a user for each data target segment is annotated. Accordingly, if no special attribute restriction relationship is required, the default correspondence between the row element and the column element may merely be established. It can be seen that annotation attributes such as the data number, the data target segment, the data title, the data segment duration and the data review opinion are determined so that the data annotation requirements of various data interception scenarios can be met.

In one example embodiment of the present application, the data annotation method is applied to a data extraction scenario; a number of rows in the annotation operation matrix is a third number, and a number of columns in the annotation operation matrix is a second number; the step of determining the annotation attribute corresponding to each column element in the annotation operation matrix may include determining an annotation attribute of a first column element to be a data number, determining an annotation attribute of a second column element to be data starting and ending positions, determining an annotation attribute of a third column element to be data extraction content, determining an annotation attribute of a fourth column element to be a data extraction classification and determining an annotation attribute of a fifth column element to be a data extraction color; and the step of establishing the attribute restriction relationship between the row element and the column element, between the row elements or between the column elements may include establishing a default correspondence between the row element and the column element and establishing a linkage relationship between target column elements.

The data starting and ending positions may denote the starting and ending positions of to-be-annotated sub-data in to-be-annotated data. The data extraction content may be the data content extracted from to-be-annotated sub-data. The data extraction classification may be a classification corresponding to each piece of data extraction content. The data extraction classification may involve a variety of classification types, which is not limited in the embodiments of the present application. The data extraction color may be a color corresponding to data, such as the color of the data itself or the background color of the data. Neither the specific color type nor the content of the data extraction color is limited in the embodiments of the present application. The target column element may be a column element for which a linkage relationship needs to be established. The specific position of the target column element in the annotation operation matrix is not limited in the embodiments of the present application.

In one example embodiment, the data annotation method provided by the embodiment of the present application may be applied to a data extraction scenario. Data extraction refers to performing extraction processing on data. It is to be understood that any type of data may require data extraction, for example, require data extraction operations such as audio extraction, text extraction, video extraction or selected picture extraction. Neither the specific extraction manner nor the extraction content of data extraction is limited in the embodiments of the present application.

For the data extraction scenario, the number of rows in the annotation operation matrix may be set to 0 and the number of columns in the annotation operation matrix may be set to n. Each row element may correspond to one piece of to-be annotated sub-data, and data extraction can be performed on each piece of to-be annotated sub-data to complete the data annotation operation. The annotation attribute corresponding to each column element may be to-be-extracted option content defined according to an extraction requirement. FIG. 4 is a schematic effect diagram of a data annotation interface suitable for a text extraction application scenario according to an embodiment of the present application. Exemplarily, the annotation attribute of the first column element may be determined to be the data number such as the data number in the form of "X Extraction 1" and "X Extraction 2" shown in FIG. 4. It may also be determined that the annotation attribute of the second column element is the data starting and ending positions. As shown in FIG. 4, the starting and ending positions (that is, the data starting and ending positions) may be named in digital form, or may be specific data content or the like. It may also be determined that the annotation attribute of the third column element is the data extraction content, such as the intercepted content shown in FIG. 4, and specified data in to-be-annotated sub-data may be extracted. It may also be determined that the annotation attribute of the fourth column element is the data extraction classification. As shown in FIG. 4, the data extraction classification may involve sub-classifications such as brand, category and ergonomics. It may also be determined that the annotation attribute of the fifth column element is the data extraction color. As shown in FIG. 4, the background color of the intercepted content is extracted. Accordingly, the attribute restriction relationship between the row element and the column element may also be established according to a special attribute restriction relationship requirement. As shown in FIG. 4, a default correspondence between the row element and the column element may be established, and the column element in the fourth column and the column element in the fifth column are taken as target column elements so that a linkage relationship between the column element in the fourth column and the column element in the fifth column are established. It can be seen that annotation attributes such as the data number, the data starting and ending positions, the data extraction content, the data extraction classification and the data extraction color are determined so that the data annotation requirements of various data extraction scenarios can be met.

In one example embodiment of the present disclosure, the data annotation method is applied to a data identification scenario; a number of rows in the annotation operation matrix is a third number, and a number of columns in the annotation operation matrix is a second number; the step of determining the annotation attribute corresponding to each column element in the annotation operation matrix may include determining an annotation attribute of a first column element to be a data number, determining an annotation attribute of a second column element to be data starting and ending time, determining an annotation attribute of a third column element to be data identification content, determining an annotation attribute of a fourth column element to be data segment duration and determining an annotation attribute of a fifth column element to be a data role; and the step of establishing the attribute restriction relationship between the row element and the column element, between the row elements or between the column elements may include establishing a default correspondence between the row element and the column element.

The data starting and ending time may denote the starting and ending time of to-be-annotated sub-data in to-be-annotated data. The data identification content may be the content obtained after to-be-annotated sub-data is identified, such as the identification content obtained after a video, audio or image is identified. The data role may be the role content included in to-be-annotated sub-data. For example, if to-be-annotated sub-data is audio data, the data role may include roles such as male and female.

In one example embodiment, the data annotation method provided by the embodiment of the present application may be applied to a data identification scenario. Data identification refers to performing identification processing on data. It is to be understood that some types of data may require data identification, for example, require data identification operations such as audio identification, text identification, video identification or selected picture selection identification. The audio mainly involves the identification and annotation requirements for converting speech into characters, and the text mainly involves the requirement for annotating specific text such as part-of-speech tagging or word segmentation processing. The video mainly involves the identification and annotation requirements of the image or audio in the video. The picture mainly involves the requirement for identifying and annotating an object in the picture. Neither the specific identification manner nor the identification content of data identification is limited in the embodiments of the present application.

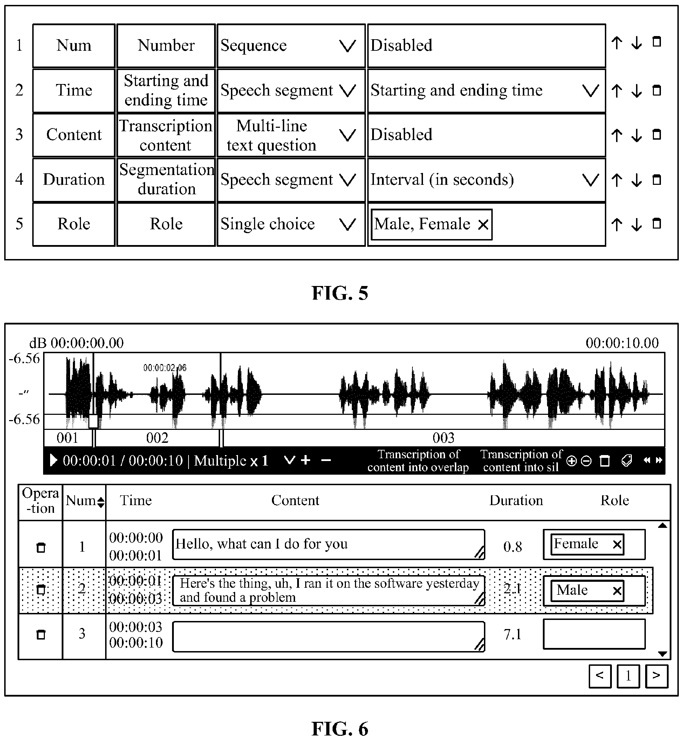

For the data identification scenario, the number of rows in the annotation operation matrix may be set to 0 and the number of columns in the annotation operation matrix may be set to n. Each row element in the annotation operation matrix may correspond to one piece of to-be annotated sub-data, and data identification can be performed on each piece of to-be annotated sub-data to complete the data annotation operation. The annotation attribute corresponding to each column element may be to-be-identified option content defined according to an identification requirement. FIG. 5 is a schematic effect diagram of a configuration interface of an annotation operation matrix according to an embodiment of the present application. As shown in FIG. 5, column elements such as "num (number), time (starting and ending time), content (transcription content), duration (segmentation duration) and role" denote annotation attributes corresponding to various column elements in the annotation operation matrix. In addition, other information may also be set for each annotation attribute, for example, the option is set to be a single choice or multiple lines, the role is set to be male or female, or the like. Exemplarily, the annotation attribute of the first column element may be determined to be a data number, and num (the data number) may be set in the form of "sequence" as shown in FIG. 5. It may also be determined that the annotation attribute of the second column element is time as shown in FIG. 5. If the to-be-annotated data is audio data, time is mainly used for performing a speech segmentation operation on the to-be-annotated audio data. It may also be determined that the annotation attribute of the third column element is the data identification content such as content shown in FIG. 5 which may be identification of to-be-annotated sub-data into multiple lines of text. It may also be determined that the annotation attribute of the fourth column element is duration as shown in FIG. 5 for which the interval (in seconds) can be set. It may also be determined that the annotation attribute of the fifth column element is role as shown in FIG. 5. If the to-be-annotated data is audio data, the role may be set to be a single selection of a male role or a female role. Accordingly, if no special attribute restriction relationship is required, the default correspondence between the row element and the column element may merely be established. FIG. 6 is a schematic effect diagram of an annotation interface of audio data in a data identification scenario according to an embodiment of the present application. The data annotation result shown in FIG. 6 is the final result of annotating a piece of audio data by using the annotation operation matrix shown in FIG. 5. As shown in FIG. 6, annotation attributes such as num, time, content, duration and role are determined according to the annotation operation matrix so that diversified data annotation requirements in the data extraction scenario can be met.

According to the preceding technical solution, in different data annotation scenarios, the determined data annotation element is used to acquire to-be-annotated data, and the determined annotation operation matrix is used to annotate the to-be-annotated data, achieving that various types of data are annotated by using an unified annotation tool, reducing the maintenance and use cost of data annotation and improving the universality and efficiency of data annotation.

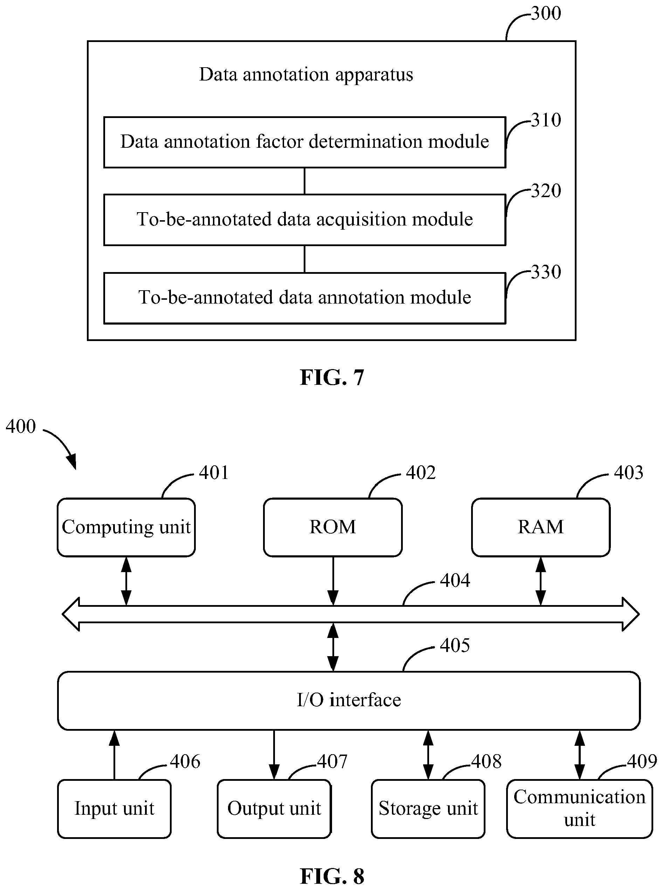

In one example, FIG. 7 is a structure diagram of a data annotation apparatus according to an embodiment of the present application. This embodiment is suitable for the case where a unified data annotation method is adopted for annotating various types of data. The apparatus may be implemented by software and/or hardware and may generally be integrated in an electronic device. The electronic device may be a computer device or the like.

As shown in FIG. 7, a data annotation apparatus 300 includes a data annotation factor determination module 310, a to-be-annotated data acquisition module 320 and a to-be-annotated data annotation module 330.

The data annotation factor determination module 310 is configured to determine a data annotation factor, where the data annotation factor includes a data annotation element and an annotation operation matrix.

The to-be-annotated data acquisition module 320 is configured to acquire to-be-annotated data according to the data annotation element.

The to-be-annotated data annotation module 330 is configured to annotate the to-be-annotated data according to the annotation operation matrix.

In one example embodiment, the data annotation factor determination module 310 is configured to: determine an element type of the data annotation element, where the element type includes an audio data element, a video data element, a picture data element, a text data element and a webpage data element; and determine a number of columns of column elements and a number of rows of row elements of the annotation operation matrix; where each of the row elements of the annotation operation matrix is configured to determine the to-be-annotated data, and each of the column elements of the annotation operation matrix is configured to determine an annotation attribute matching the to-be-annotated data.

In one example embodiment, the to-be-annotated data acquisition module 320 is configured to determine a target element type according to an element type of the data annotation element and acquire the to-be-annotated data according to the target element type.

In one example embodiment, the to-be-annotated data annotation module 330 is configured to: determine an annotation attribute corresponding to each column element in the annotation operation matrix and to-be-annotated sub-data corresponding to each row element in the annotation operation matrix according to the to-be-annotated data; establish a mapping relationship between each piece of to-be-annotated sub-data and respective row element of the annotation operation matrix; establish an attribute restriction relationship between a row element and a column element, between row elements or between column elements; where the attribute restriction relationship includes a default correspondence, an inclusion relationship, an included relationship, a mutual exclusion relationship and a linkage relationship; and annotate each piece of to-be-annotated sub-data according to the annotation attribute corresponding to each column element and the attribute restriction relationship.

In one example embodiment, the data annotation apparatus is applied to a data cleaning scenario; a number of rows in the annotation operation matrix is a first number, and a number of columns in the annotation operation matrix is a second number; the to-be-annotated data annotation module 330 is configured to determine an annotation attribute of a first column element to be data filtration, determine an annotation attribute of a second column element to be a filtration type and establish a default correspondence between the row element and the column element.

In one example embodiment, the data annotation apparatus is applied to a data interception scenario; a number of rows in the annotation operation matrix is a third number, and a number of columns in the annotation operation matrix is a second number; the to-be-annotated data annotation module 330 is configured to determine an annotation attribute of a first column element to be a data number, determine an annotation attribute of a second column element to be a data target segment, determine an annotation attribute of a third column element to be a data title, determine an annotation attribute of a fourth column element to be data segment duration, determine an annotation attribute of a fifth column element to be a data review opinion and establish a default correspondence between the row element and the column element.

In one example embodiment, the data annotation apparatus is applied to a data extraction scenario; a number of rows in the annotation operation matrix is a third number, and a number of columns in the annotation operation matrix is a second number; the to-be-annotated data annotation module is configured to determine an annotation attribute of a first column element to be a data number, determine an annotation attribute of a second column element to be data starting and ending positions, determine an annotation attribute of a third column element to be data extraction content, determine an annotation attribute of a fourth column element to be a data extraction classification, determine an annotation attribute of a fifth column element to be a data extraction color, establish a default correspondence between the row element and the column element and establish a linkage relationship between target column elements.

In one example embodiment, the data annotation apparatus is applied to a data identification scenario; a number of rows in the annotation operation matrix is a third number, and a number of columns in the annotation operation matrix is a second number; the to-be-annotated data annotation module 330 is configured to determine an annotation attribute of a first column element to be a data number, determine an annotation attribute of a second column element to be data starting and ending time, determine an annotation attribute of a third column element to be data identification content, determine an annotation attribute of a fourth column element to be data segment duration, determine an annotation attribute of a fifth column element to be a data role and establish a default correspondence between the row element and the column element.

The preceding data annotation apparatus can execute the data annotation method provided by any embodiment of the present application and has functional modules and beneficial effects corresponding to the executed method. For technical details not described in detail in this embodiment, reference may be made to the data annotation method provided by any embodiment of the present application.

The preceding data annotation apparatus can execute the data annotation method provided in the embodiment of the present application. Therefore, based on the data annotation method described in the embodiment of the present application, those skilled in the art can understand the embodiments of the data annotation apparatus provided in this embodiment and various variations thereof. Thus, how the data annotation apparatus implements the data annotation method provided in the embodiment of the present application is not described in detail here. Any apparatus used by those skilled in the art to implement the data annotation method provided in the embodiment of the present application falls within the scope of the present application.

In one example, the present disclosure further provides an electronic device, a readable storage medium and a computer program product.

FIG. 8 is a block diagram of an example electronic device 400 for implementing an embodiment of the present disclosure. Electronic devices are intended to represent various forms of digital computers, for example, laptop computers, desktop computers, worktables, personal digital assistants, servers, blade servers, mainframe computers and other applicable computers. Electronic devices may also represent various forms of mobile devices, for example, personal digital assistants, cellphones, smartphones, wearable devices and other similar computing devices. Herein the shown components, the connections and relationships between these components, and the functions of these components are illustrative only and are not intended to limit the implementation of the present disclosure as described and/or claimed herein.

As shown in FIG. 8, the device 400 includes a computing unit 401. The computing unit 401 may perform various appropriate actions and processing according to a computer program stored in a read-only memory (ROM) 402 or a computer program loaded into a random-access memory (RAM) 403 from a storage unit 408. The RAM 403 may also store various programs and data required for operations of the device 400. The computing unit 401, the ROM 402 and the RAM 403 are connected to each other by a bus 404. An input/output (I/O) interface 405 is also connected to the bus 404.

Multiple components in the device 400 are connected to the I/O interface 405. The multiple components include an input unit 406 such as a keyboard or a mouse, an output unit 407 such as various types of displays or speakers, the storage unit 408 such as a magnetic disk or an optical disk, and a communication unit 409 such as a network card, a modem or a wireless communication transceiver. The communication unit 409 allows the device 400 to exchange information/data with other devices over a computer network such as the Internet and/or over various telecommunication networks.

The computing unit 401 may be a general-purpose and/or special-purpose processing component having processing and computing capabilities. Examples of the computing unit 401 include, but are not limited to, a central processing unit (CPU), a graphics processing unit (GPU), a special-purpose artificial intelligence (AI) computing chip, a computing unit executing machine learning model algorithms, a digital signal processor (DSP), and any appropriate processor, controller and microcontroller. The computing unit 401 performs various methods and processing described above, such as the data annotation method. For example, in some embodiments, the data annotation method may be implemented as a computer software program tangibly contained in a machine-readable medium such as the storage unit 408. In some embodiments, part or all of computer programs may be loaded and/or installed on the device 400 via the ROM 402 and/or the communication unit 409. When the computer program is loaded to the RAM 403 and executed by the computing unit 401, one or more steps of the preceding data annotation method may be executed. Alternatively, in other embodiments, the computing unit 401 may be configured, in any other suitable manner (for example, by means of firmware), to perform the data annotation method.

Herein various embodiments of the systems and techniques described above may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input device and at least one output device and transmitting the data and instructions to the memory system, the at least one input device and the at least one output device.

Program codes for implementation of the method of the present disclosure may be written in any combination of one or more programming languages. These program codes may be provided for the processor or controller of a general-purpose computer, a special-purpose computer or another programmable data processing device to enable functions/operations specified in a flowchart and/or a block diagram to be implemented when the program codes are executed by the processor or controller. The program codes may all be executed on a machine; may be partially executed on a machine; may serve as a separate software package that is partially executed on a machine and partially executed on a remote machine; or may all be executed on a remote machine or a server.

In the context of the present disclosure, the machine-readable medium may be a tangible medium that contains or stores a program available for an instruction execution system, apparatus or device or a program used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any appropriate combination thereof. Concrete examples of the machine-readable storage medium may include an electrical connection based on one or more wires, a portable computer disk, a hard disk, a random-access memory (RAM), a read-only memory (ROM), an erasable programmable read-only memory (EPROM) or a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on a computer. The computer has a display device (for example, a cathode-ray tube (CRT) or liquid-crystal display (LCD) monitor) for displaying information to the user; and a keyboard and a pointing device (for example, a mouse or a trackball) through which the user can provide input to the computer. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein) or a computing system including any combination of such back-end, middleware or front-end components. The components of the system may be interconnected by any form or medium of digital data communication (for example, a communication network). Examples of the communication network include a local area network (LAN), a wide area network (WAN), a blockchain network and the Internet.

The computing system may include clients and servers. A client and a server are generally remote from each other and typically interact through a communication network. The relationship between the client and the server arises by virtue of computer programs running on the respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service.

According to the embodiments of the present application, after the data annotation factor including the data annotation element and the annotation operation matrix is determined, the to-be-annotated data is acquired according to the data annotation element, and the to-be-annotated data is annotated according to the annotation operation matrix, solving the problems of high maintenance and use cost, poor universality and low efficiency of the existing data annotation method, and thus reducing the maintenance and use cost of data annotation and improving the universality and efficiency of data annotation.

It is to be understood that various forms of the preceding flows may be used, with steps reordered, added or removed. For example, the steps described in the present disclosure may be executed in parallel, in sequence or in a different order as long as the desired result of the technical solution disclosed in the present disclosure is achieved. The execution sequence of these steps is not limited herein.

The scope of the present disclosure is not limited to the preceding embodiments. It is to be understood by those skilled in the art that various modifications, combinations, subcombinations and substitutions may be made depending on design requirements and other factors. Any modifications, equivalent substitutions, improvements and the like made within the spirit and principle of the present disclosure are within the scope of the present disclosure.

## Claims

1. A data annotation method, comprising:
determining (S110) a data annotation factor, wherein the data annotation factor comprises a data annotation element and an annotation operation matrix;
acquiring (S120) to-be-annotated data according to the data annotation element; and
annotating (S130) the to-be-annotated data according to the annotation operation matrix.

2. The data annotation method of claim 1, wherein determining the data annotation factor comprises:
determining (S210) an element type of the data annotation element, wherein the element type comprises an audio data element, a video data element, a picture data element, a text data element and a webpage data element; and
determining (S220) a number of columns of column elements and a number of rows of row elements of the annotation operation matrix;
wherein each of the row elements of the annotation operation matrix is configured to determine the to-be-annotated data, and each of the column elements of the annotation operation matrix is configured to determine an annotation attribute matching the to-be-annotated data.

3. The data annotation method of claim 1, wherein acquiring the to-be-annotated data according to the data annotation element comprises:
determining (S230) a target element type according to an element type of the data annotation element; and
acquiring (S240) the to-be-annotated data according to the target element type.

4. The data annotation method of claim 1, wherein annotating the to-be-annotated data according to the annotation operation matrix comprises:
determining (S250) an annotation attribute corresponding to each column element in the annotation operation matrix and to-be-annotated sub-data corresponding to each row element in the annotation operation matrix according to the to-be-annotated data;
establishing (S260) a mapping relationship between each piece of to-be-annotated sub-data and a respective row element of the annotation operation matrix;
establishing (S270) an attribute restriction relationship between a row element and a column element, between row elements or between column elements, wherein the attribute restriction relationship comprises a default correspondence, an inclusion relationship, an included relationship, a mutual exclusion relationship and a linkage relationship; and
annotating (S280) each piece of to-be-annotated sub-data according to the annotation attribute corresponding to each column element and the attribute restriction relationship.

5. The data annotation method of claim 4, wherein the data annotation method is applied to a data cleaning scenario; a number of rows in the annotation operation matrix is a first number, and a number of columns in the annotation operation matrix is a second number;
determining the annotation attribute corresponding to each column element in the annotation operation matrix comprises:
determining an annotation attribute of a first column element to be data filtration; and
determining an annotation attribute of a second column element to be a filtration type; and
establishing the attribute restriction relationship between the row element and the column element, between the row elements or between the column elements comprises:
establishing a default correspondence between the row element and the column element.

6. The data annotation method of claim 4, wherein the data annotation method is applied to a data interception scenario; a number of rows in the annotation operation matrix is a third number, and a number of columns in the annotation operation matrix is a second number;
determining the annotation attribute corresponding to each column element in the annotation operation matrix comprises:
determining an annotation attribute of a first column element to be a data number;
determining an annotation attribute of a second column element to be a data target segment;
determining an annotation attribute of a third column element to be a data title;
determining an annotation attribute of a fourth column element to be data segment duration; and
determining an annotation attribute of a fifth column element to be a data review opinion; and
establishing the attribute restriction relationship between the row element and the column element, between the row elements or between the column elements comprises:
establishing a default correspondence between the row element and the column element.

7. The data annotation method of claim 4, wherein the data annotation method is applied to a data extraction scenario; a number of rows in the annotation operation matrix is a third number, and a number of columns in the annotation operation matrix is a second number;
determining the annotation attribute corresponding to each column element in the annotation operation matrix comprises:
determining an annotation attribute of a first column element to be a data number;
determining an annotation attribute of a second column element to be data starting and ending positions;
determining an annotation attribute of a third column element to be data extraction content;
determining an annotation attribute of a fourth column element to be a data extraction classification; and
determining an annotation attribute of a fifth column element to be a data extraction color; and
establishing the attribute restriction relationship between the row element and the column element, between the row elements or between the column elements comprises:
establishing a default correspondence between the row element and the column element; and
establishing a linkage relationship between target column elements.

8. The data annotation method of claim 4, wherein the data annotation method is applied to a data identification scenario; a number of rows in the annotation operation matrix is a third number, and a number of columns in the annotation operation matrix is a second number;
determining the annotation attribute corresponding to each column element in the annotation operation matrix comprises:
determining an annotation attribute of a first column element to be a data number;
determining an annotation attribute of a second column element to be data starting and ending time;
determining an annotation attribute of a third column element to be data identification content;
determining an annotation attribute of a fourth column element to be data segment duration; and
determining an annotation attribute of a fifth column element to be a data role; and
establishing the attribute restriction relationship between the row element and the column element, between the row elements or between the column elements comprises:
establishing a default correspondence between the row element and the column element.

9. A data annotation apparatus, comprising:
a data annotation factor determination module (S310), which is configured to determine a data annotation factor, wherein the data annotation factor comprises a data annotation element and an annotation operation matrix;
a to-be-annotated data acquisition module (S320), which is configured to acquire to-be-annotated data according to the data annotation element; and
a to-be-annotated data annotation module (S330), which is configured to annotate the to-be-annotated data according to the annotation operation matrix.

10. The data annotation apparatus of claim 9, wherein the data annotation factor determination module (S310) is configured to:
determine an element type of the data annotation element, wherein the element type comprises an audio data element, a video data element, a picture data element, a text data element and a webpage data element; and
determine a number of columns of column elements and a number of rows of row elements of the annotation operation matrix,
wherein each of the row elements of the annotation operation matrix is configured to determine the to-be-annotated data, and each of the column elements of the annotation operation matrix is configured to determine an annotation attribute matching the to-be-annotated data.

11. The data annotation apparatus of claim 9, wherein the to-be-annotated data acquisition module (S320) is configured to:
determine a target element type according to an element type of the data annotation element; and
acquire the to-be-annotated data according to the target element type.

12. The data annotation apparatus of claim 9, wherein the to-be-annotated data annotation module (S330) is configured to:
determine an annotation attribute corresponding to each column element in the annotation operation matrix and to-be-annotated sub-data corresponding to each row element in the annotation operation matrix according to the to-be-annotated data;
establish a mapping relationship between each piece of to-be-annotated sub-data and a respective row element of the annotation operation matrix;
establish an attribute restriction relationship between a row element and a column element, between row elements or between column elements, wherein the attribute restriction relationship comprises a default correspondence, an inclusion relationship, an included relationship, a mutual exclusion relationship and a linkage relationship; and
annotate each piece of to-be-annotated sub-data according to the annotation attribute corresponding to each column element and the attribute restriction relationship.

13. An electronic device, comprising:
at least one processor; and
a memory communicatively connected to the at least one processor,
wherein the memory stores an instruction executable by the at least one processor, and the instruction is executed by the at least one processor to cause the at least one processor to perform the data annotation method of any one of claims 1 to 8.

14. A non-transitory computer-readable storage medium storing a computer instruction for causing a computer to perform the data annotation method of any one of claims 1 to 8.

15. A computer program product, comprising a computer program which, when executed by a processor, implements the data annotation method of any one of claims 1 to 8.
